# EUROPEAN PATENT SPECIFICATION

(11) **EP 4 369 035 B1**
(45) Date of publication and mention of the grant of the patent: **22.07.2026**
(21) Application number: 22837513.5
(22) Date of filing: 24.06.2022
(51) Int. Cl.: G01S 7/526, G01S 15/10, G01S 15/931, G01S 7/527, G01S 13/931

(54) **OBJECT DETECTION DEVICE**
OBJEKTERKENNUNGSVORRICHTUNG
DISPOSITIF DE DÉTECTION D'OBJET

(30) Priority: 06.07.2021 JP 2021112222
(43) Date of publication of application: 15.05.2024
(73) Proprietor: AISIN CORPORATION, Kariya-shi, Aichi 448-8650 (JP)
(72) Inventor: SUGAE, Ippei, Kariya-shi, Aichi 448-8650 (JP); WAKITA, Kosuke, Kariya-shi, Aichi 448-8650 (JP)
(74) Representative: TBK
(86) International application number: PCT/JP2022/025400
(87) International publication number: WO 2023/282096

(56) References cited:
- CN-A- 105 699 949
- JP-A- 2008 170 287
- JP-A- 2014 174 007
- JP-A- 2014 174 007
- JP-A- H10 148 671
- JP-U- H0 579 487
- KR-A- 20120 010 457
- US-A1- 2019 302 258
- US-A1- 2020 400 816

## Description

### TECHNICAL FIELD

The present disclosure relates to object detection devices.

### BACKGROUND ART

Vehicle control systems etc. use devices for detecting objects present around the vehicle, using the time-of-flight (TOF) method. The TOF method is a technique to calculate the distance from a vehicle or the like to an object, etc., based on the difference between the timing at which a transmission wave such as an ultrasonic wave has been transmitted and the timing at which a reception wave (reflected wave) produced by the reflection of the transmission wave off an object has been received. As a technique for improving the accuracy of object detection by the TOF method, constant false alarm rate (CFAR) processing is known which reduces the effects of road surface clutter etc. by subtracting, from the value of a certain reception signal, the moving average value of the values of reception signals acquired during predetermined periods before and after the reception signal.
Further background is disclosed in US 2020/400816 A1 "Object Detection Device", JP 2014 174007 A "Radar Apparatus" and US 2019/302258 A1 "Parking Assistance System of Vehicle and Method for Improving Detection Performance of Ultrasonic Sensor Therefor".

### CITATIONS LIST

### PATENT LITERATURE

Patent Literature 1: JP 2006-292597 A

### SUMMARY OF INVENTION

### TECHNICAL PROBLEMS

The present disclosure provides an object detection device that can detect objects with high accuracy using CFAR processing.

### SOLUTIONS TO PROBLEMS

An object detection device as an example of the present disclosure includes a transmitting unit that transmits a transmission wave, a receiving unit that receives a reception wave produced by the reflection of the transmission wave off an object, a CFAR processing unit that acquires a difference value between a processing target value that is the value of a processing target signal corresponding to the reception wave received at a certain detection timing, and a reference value based on a moving average value of the values of reference signal groups corresponding to the reception wave received during predetermined periods before and after the detection timing, a detection processing unit that generates information about the object, based on the difference value, and a setting unit that selects the reference value suitable for a detection distance corresponding to the detection timing from a plurality of the reference values.

The above configuration allows the reference value to be used in the CFAR processing (a value to be subtracted from the processing target value) to be optimized according to the distance. This can improve the accuracy of object detection using the CFAR processing.

The setting unit sets the reference value such that the shorter the detection distance, the larger the reference value.

This can reduce erroneous detection of objects at short distances and failure to detect objects at long distances.

The setting unit selects a first reference value from the plurality of reference values when the detection distance is in a predetermined short distance range, selects a second reference value smaller than the first reference value from the plurality of reference values when the detection distance is in a medium distance range farther than the short distance range, and selects a third reference value smaller than the second reference value from the plurality of reference values when the detection distance is in a long distance range farther than the medium distance range.

This can set the reference values suitable for the short distance, the medium distance, and the long distance.

The first reference value is a maximum average value that is the larger value of a first average value that is the average value of the values of a first reference signal group corresponding to the reception wave received during a first predetermined time before the detection timing, and a second average value that is the average value of the values of a second reference signal group corresponding to the reception wave received during a second predetermined time after the detection timing, the second reference value is an overall average value that is the average value of all reference values including the values of the first reference signal group and the values of the second reference signal group, and the third reference value is a minimum average value that is the smaller value of the first average value and the second average value.

This can set the reference values for the short distance, the medium distance, and the long distance, using the overall average value, the maximum average value, and the minimum average value.

### BRIEF DESCRIPTION OF DRAWINGS

FIG. 1 is a top view showing an example of the external appearance of a vehicle including a driving assistance system according to an embodiment.
FIG. 2 is a block diagram showing an example of hardware configurations of an ECU and an object detection device according to a first embodiment.
FIG. 3 is a diagram showing an example of a method of calculating a distance by the TOF method.
FIG. 4 is a block diagram showing an example of a functional configuration of the object detection device according to the embodiment.
FIG. 5 is a diagram showing an example of CFAR processing and reference value setting processing according to the embodiment.
FIG. 6 is a diagram showing an example of an overall average value, a maximum average value, and a minimum average value according to the embodiment.
FIG. 7 is a flowchart showing an example of the reference value setting processing in the object detection device according to the embodiment.

### DESCRIPTION OF EMBODIMENTS

Hereinafter, an embodiment of the present disclosure will be described with reference to the drawings. A configuration of the embodiment described below and functions and effects brought by the configuration are merely an example. The embodiment is not limited to the following descriptions.

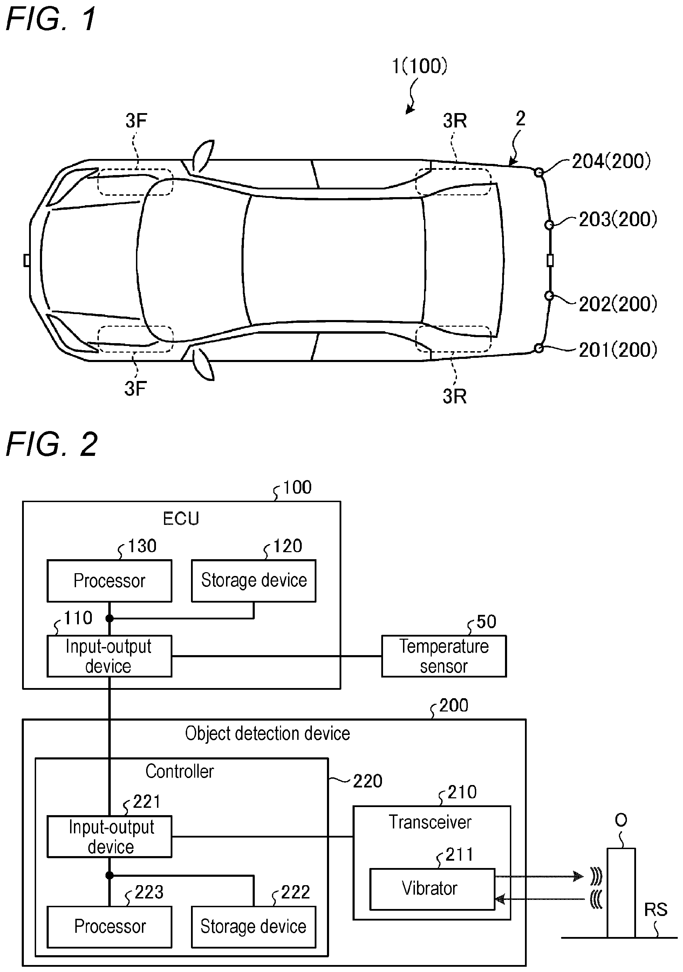

FIG. 1 is a top view showing an example of the external appearance of a vehicle 1 including a driving assistance system according to the embodiment. The driving assistance system described as an example below is a system that detects objects present around the vehicle 1 (other vehicles, road obstacles, persons, animals, etc.) using ultrasonic waves, and performs processing for assisting the driving of the vehicle 1 based on the detection results.

As shown in FIG. 1, the driving assistance system includes an electronic control unit (ECU) 100 mounted in the vehicle 1 with a pair of front wheels 3F and a pair of rear wheels 3R, and object detection devices 201 to 204 mounted on the exterior of the vehicle 1.

In the example shown in FIG. 1, the object detection devices 201 to 204 are installed in different positions on a rear end portion (such as a rear bumper) of a vehicle body 2 as the exterior of the vehicle 1. In the present embodiment, the object detection devices 201 to 204 have the same hardware configuration and functions. Thus, in the following, for the sake of simplicity, the object detection devices 201 to 204 are sometimes collectively referred to as object detection devices 200.

Note that the installation positions of the object detection devices 200 are not limited to the example shown in FIG. 1. The object detection devices 200 may be installed, for example, on a front end portion (such as a front bumper) or a side surface portion of the vehicle body 2. The number of the object detection devices 200 is not limited to the example shown in FIG. 1.

FIG. 2 is a block diagram showing an example of hardware configurations of the ECU 100 and the object detection devices 200 according to the first embodiment.

The ECU 100 includes an input-output device 110, a storage device 120, and a processor 130.

The input-output device 110 is an interface that allows the transmission and reception of information between the ECU 100 and external devices (such as the object detection devices 200). The storage device 120 includes a main storage device such as a read-only memory (ROM) or a random-access memory (RAM), and/or an auxiliary storage device such as a hard disk drive (HDD) or a solid-state drive (SSD). The processor 130 is an arithmetic processing device including a central processing unit (CPU) or the like that performs various types of arithmetic processing according to a program stored in the storage device 120. The processor 130 performs various types of processing (e.g. processing to enable automatic driving, alarm output, etc.) based on various types of information input from the input-output device 110 (such as detection results from the object detection devices 200).

Each object detection device 200 includes a transceiver 210 and a controller 220.

The transceiver 210 includes a vibrator 211 such as a piezoelectric element, and achieves transmission and reception of ultrasonic waves by the action of the vibrator 211. Specifically, the transceiver 210 transmits, as a transmission wave, an ultrasonic wave generated according to the vibration of the vibrator 211, and receives, as a reception wave, the vibration of the vibrator 211 produced by the reflection of the ultrasonic wave transmitted as the transmission wave back from an object present outside. In the example shown in FIG. 2, an obstacle O installed on a road surface RS is illustrated as the object that reflects the transmission wave from the transceiver 210.

FIG. 2 illustrates a configuration in which both the transmission of a transmission wave and the reception of a reception wave are performed by the single transceiver 210 including the single vibrator 211, but the embodiment is not limited thereto. For example, a configuration in which a transmission-side mechanism and a reception-side mechanism are separated, such as a configuration in which a first vibrator for transmitting a transmission wave and a second vibrator for receiving a reception wave are separately provided, may be used.

The controller 220 includes an input-output device 221, a storage device 222, and a processor 223.

The input-output device 221 is an interface that allows the transmission and reception of information between the controller 220 and external devices (such as the ECU 100 and the transceiver 210). The storage device 222 includes a main storage device such as a ROM or a RAM, and/or an auxiliary storage device such as an HDD or an SSD. The processor 223 is an arithmetic processing device including a CPU or the like that performs various types of arithmetic processing according to a program stored in the storage device 333. The processor 223 performs various types of processing (such as the generation of information about the obstacle O) based on various types of information input from the input-output device 221 (such as detection data from the transceiver 210).

Each object detection device 200 according to the present embodiment detects a distance to an object (such as the obstacle O) by a technique called the so-called TOF method. As described in detail below, the TOF method is a technique for calculating a distance to an object, based on the difference between the timing at which a transmission wave has been transmitted (more specifically, a transmission wave has started to be transmitted) and the timing at which a reception wave has been received (more specifically, a reception wave has started to be received).

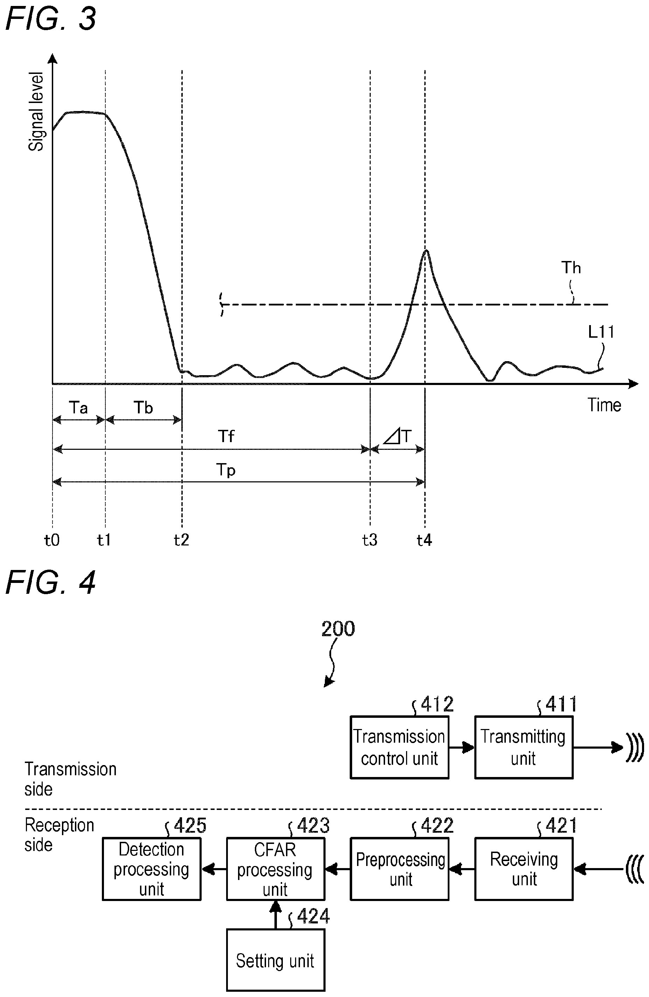

FIG. 3 is a diagram showing an example of a method of calculating the distance by the TOF method. FIG. 3 illustrates an envelope L11 (echo information) indicating temporal changes in the intensity (signal level) of an ultrasonic wave transmitted and received by the transceiver 210. In a graph shown in FIG. 3, the horizontal axis corresponds to time (TOF), and the vertical axis corresponds to the intensity of an ultrasonic wave transmitted and received by the transceiver 210 (the magnitude of vibration of the vibrator 211).

The envelope L11 indicates temporal changes in intensity indicating the magnitude of vibration of the vibrator 211. The envelope L11 illustrated in FIG. 3 shows that the vibrator 211 is driven to vibrate at a timing t0 for a time Ta to complete the transmission of a transmission wave at a timing t1, and then the vibration of the vibrator 211 due to inertia continues while attenuating for a time Tb until a timing t2. Thus, in the graph shown in FIG. 3, the time Tb corresponds to a so-called reverberation time.

The envelope L11 reaches a peak at which the magnitude of vibration of the vibrator 211 becomes equal to or higher than a detection threshold Th at a timing t4 after a lapse of a time Tp from the timing t0 at which the transmission of the transmission wave has been started. The detection threshold Th is a value set to identify whether the vibration of the vibrator 211 is produced by the reception of a reflected wave from the obstacle O (such as another vehicle, a structure, or a pedestrian), or by the reception of a reflected wave from an object (such as the road surface RS) other than the obstacle O. Although the detection threshold Th is shown as a constant value here, the detection threshold Th may be a variable value that changes according to the circumstances. Vibration having a peak equal to or higher than the detection threshold Th can be regarded as being produced by the reception of a reflected wave from the obstacle O.

The envelope L11 in this example indicates that the vibration of the vibrator 211 attenuates at and after the timing t4. Thus, the timing t4 corresponds to the timing at which the reception of the reflected wave from the obstacle O has been completed, in other words, the timing at which the transmission wave last transmitted at the timing t1 returns as the reflected wave.

In the envelope L11, a timing t3 as the start point of the peak at the timing t4 corresponds to the timing at which the reception of the reflected wave from the obstacle O has started, in other words, the timing at which the transmission wave first transmitted at the timing t0 returns as the reflected wave. Therefore, a time ΔT between the timing t3 and the timing t4 is equal to the time Ta as the transmission time of the transmission wave.

From the above, in order to obtain the distance from the transmission-reception source of the ultrasonic wave to the obstacle O, using TOF, it is necessary to obtain a time Tf between the timing t0 at which the transmission wave has started to be transmitted and the timing t3 at which the reflected wave has started to be received. The time Tf can be obtained by subtracting the time ΔT equal to the time Ta as the transmission time of the transmission wave from the time Tp as the difference between the timing t0 and the timing t4 at which the intensity of the reflected wave that has exceeded the detection threshold Th reaches the peak.

The timing t0 at which the transmission wave has started to be transmitted can be easily determined as the timing at which the object detection device 200 has started operation. The time Ta as the transmission time of the transmission wave has been determined in advance by setting or the like. Thus, the distance from the transmission-reception source to the obstacle O can be obtained by determining the timing t4 at which the intensity of the reflected wave reaches the peak equal to or higher than the detection threshold Th.

FIG. 4 is a block diagram showing an example of a functional configuration of the object detection devices 200 according to the embodiment. Each object detection device 200 according to the present embodiment includes a transmitting unit 411, a transmission control unit 412, a receiving unit 421, a preprocessing unit 422, a CFAR processing unit 423, a setting unit 424, and a detection processing unit 425. These functional components 411, 412, and 421 to 425 can be implemented, for example, by the cooperation of hardware components of the object detection device 200 as illustrated in FIG. 2 and software components such as a program. Note that in the example shown in FIG. 4, a transmission-side configuration and a reception-side configuration are separated, but this illustrated mode is merely for convenience of description. In the present embodiment, as described above, both the transmission of a transmission wave and the reception of a reception wave are performed by the single transceiver 210 including the single vibrator 211. However, as described above, a configuration in which a transmission-side configuration and a reception-side configuration are separated is also applicable.

The transmitting unit 411 transmits a transmission wave to the outside by vibrating the vibrator 211 described above. Other than the vibrator 211, the transmitting unit 411 can be configured using, for example, a circuit that generates a carrier wave, a circuit that generates a pulse signal corresponding to identification information to be provided to the carrier wave, a multiplier that modulates the carrier wave according to the pulse signal, an amplifier that amplifies a transmission signal output from the multiplier, etc.

The transmission control unit 412 controls the transmission of the transmission wave. The transmission control unit 412 controls, for example, the transmission time, transmission interval, intensity, wavelength, frequency, etc. of the transmission wave. The transmission control unit 412 may adjust the transmission of the transmission wave based on, for example, an object detection result, the conditions of the road surface RS, the speed of the vehicle 1, etc.

The receiving unit 421 receives a reception wave (reflected wave) produced by the reflection of the transmission wave transmitted from the transmitting unit 411 off an object. Other than the vibrator 211, the receiving unit 421 can be configured using, for example, an AD converter or the like.

The preprocessing unit 422 performs preprocessing to generate echo information indicating temporal changes in the intensity of the reception wave (e.g. an envelope as illustrated in FIG. 3). The preprocessing may include, for example, amplification processing to amplify a reception signal corresponding to the reception wave, filtering processing to reduce noise included in the amplified reception signal, correlation processing to acquire a correlation value indicating the degree of similarity between the transmission signal and the reception signal, etc.

The CFAR processing unit 423 performs CFAR processing on the echo information generated by the preprocessing unit 422. The CFAR processing unit 423 acquires a difference value between a processing target value that is the value of a processing target signal corresponding to the reception wave received at a certain detection timing, and a reference value based on a moving average value of the values of reference signal groups corresponding to the reception wave received during predetermined periods before and after the detection timing. The CFAR processing unit 423 according to the present embodiment performs, as the CFAR processing, cell-averaging constant false alarm rate (CA-CFAR) processing, greatest-of constant false alarm rate (GO-CFAR) processing, and smallest-of constant false alarm rate (SO-CFAR) processing. The CA-CFAR processing is processing that uses, as a reference value, the average value of all reference values including the values of a first reference signal group corresponding to the reception wave received during a first predetermined period before the detection timing, and the values of a second reference signal group corresponding to the reception wave received during a second predetermined period after the detection timing (the overall average value). The GO-CFAR processing is processing that uses, as a reference value, the larger value of a first average value that is the average value of the values of the first reference signal group and a second average value that is the average value of the values of the second reference signal group (the maximum average value). The SO-CFAR processing is processing that uses, as a reference value, the smaller value of the first average value and the second average value (the minimum average value).

The setting unit 424 executes reference value setting processing to select a reference value to be used in the CFAR processing from a plurality of preset reference values, based on a detection distance corresponding to the detection timing. The setting unit 424 according to the present embodiment sets (selects) a reference value in the CFAR processing such that the shorter the detection distance, the larger the reference value. A specific example of the reference value setting processing will be described later.

The detection processing unit 425 generates information about the object based on the difference value acquired by the CFAR processing unit 423. For example, the detection processing unit 425 generates information indicating the presence or absence of the object (obstacle O), the distance to the object, etc., based on TOF when the difference value exceeds a predetermined threshold (e.g. the detection threshold Th illustrated in FIG. 3).

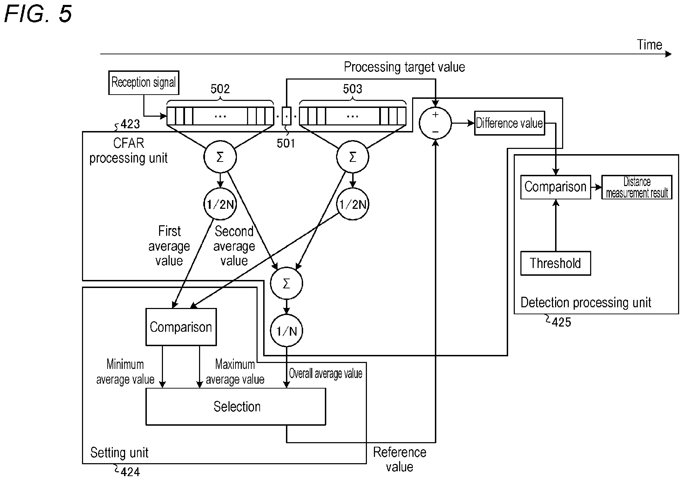

FIG. 5 is a diagram showing an example of the CFAR processing and the reference value setting processing according to the embodiment. FIG. 5 illustrates a processing target signal 501, a first reference signal group 502, and a second reference signal group 503. The processing target signal 501 is a reception signal corresponding to a reception wave received at a certain detection timing. The first reference signal group 502 is a reception signal group corresponding to the reception wave received during the first predetermined period before the detection timing corresponding to the processing target signal 501. The second reference signal group 503 is a reception signal group corresponding to the reception wave received during the second predetermined period after the detection timing corresponding to the processing target signal 501.

As shown in FIG. 5, the CFAR processing unit 423 calculates the first average value that is the average value of the values of the first reference signal group 502, the second average value that is the average value of the values of the second reference signal group 503, and the overall average value that is the average value of all reference values including the values of the first reference signal group 502 and the values of the second reference signal group 503.

The setting unit 424 compares the first average value with the second average value, outputs the larger one as the maximum average value, and outputs the smaller one as the minimum average value. The setting unit 424 selects an average value suitable for a distance (detection distance) corresponding to the detection timing corresponding to the processing target signal 501 from the overall average value, the maximum average value, and the minimum average value, and sets the selected average value as the reference value. Specifically, the setting unit 424 sets the maximum average value as the reference value when the detection distance is in a predetermined short distance range, sets the overall average value as the reference value when the detection distance is in a predetermined medium distance range farther than the short distance range, and sets the minimum average value as the reference value when the detection distance is in a predetermined long distance range farther than the medium distance range. Then, the CFAR processing unit 423 calculates a difference value by subtracting the reference value set by the setting unit 424 from the processing target value. The detection processing unit 425 generates a measurement result indicating the distance to the obstacle O or the like, based on the result of a comparison between the difference value calculated as described above and a threshold (e.g. the detection threshold Th illustrated in FIG. 3).

Although the specific numerical values of the short distance range, the medium distance range, and the long distance range should not be limited to particular ones, the short distance range can be set to less than 2 m, the medium distance range to 2 m or more and less than 4 m, and the long distance range to 4 m or more, for example.

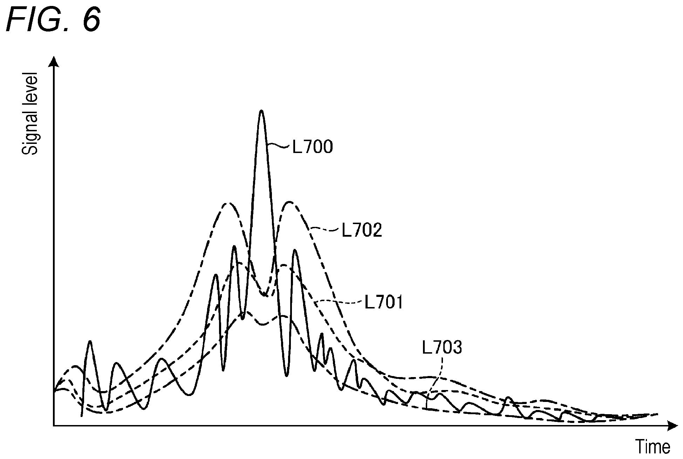

FIG. 6 is a diagram showing an example of the overall average value, the maximum average value, and the minimum average value according to the embodiment. FIG. 6 illustrates the relationships between an envelope L700 indicating temporal changes in the signal level (intensity) of the reception wave, an overall average value line L701 indicating temporal changes in the overall average value, a maximum average value line L702 indicating temporal changes in the maximum average value, and a minimum average value line L703 indicating temporal changes in the minimum average value. As shown in FIG. 6, the maximum average value is larger than the overall average value, and the minimum average value is smaller than the overall average value. By using the three average values having such magnitude relationships, the reference value in the CFAR processing can be properly set in accordance with the detection distance.

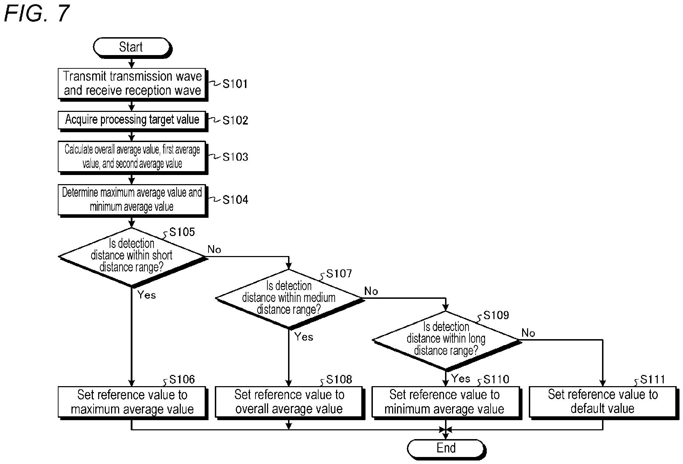

FIG. 7 is a flowchart showing an example of the reference value setting processing in each object detection device 200 according to the embodiment. When the transmitting unit 411 transmits a transmission wave and the receiving unit 421 receives a reception wave (S101), the CFAR processing unit 423 acquires a processing target value that is the value of the processing target signal 501 (see FIG. 5) from echo information generated by the preprocessing unit 422 (S102). After that, the CFAR processing unit 423 calculates the overall average value, the first average value, and the second average value (S103). The setting unit 424 determines the larger one of the first average value and the second average value as the maximum average value, and determines the smaller one as the minimum average value (S104).

After that, the setting unit 424 determines whether or not the detection distance is within the short distance range (S105). When the detection distance is within the short distance range (S105: Yes), the setting unit 424 sets the reference value to the maximum average value (S106). When the detection distance is not within the short distance range (S105: No), the setting unit 424 determines whether or not the detection distance is within the medium distance range (S107). When the detection distance is within the medium distance range (S107: Yes), the setting unit 424 sets the reference value to the overall average value (S108). When the detection distance is not within the medium distance range (S107: No), the setting unit 424 determines whether or not the detection distance is within the long distance range (S109). When the detection distance is within the long distance range (S109: Yes), the setting unit 424 sets the reference value to the minimum average value (S110). When the detection distance is not within the long distance range (S109: No), the setting unit 424 sets the reference value to a predetermined default value (S111). The difference value is calculated by the CFAR processing using the reference value set in this manner, and information about the object (the obstacle O or the like) is generated based on the difference value.

The above configuration, in which the shorter the detection distance, the higher the reference value in the CFAR processing is set, thus prevents the difference value calculated by the CFAR processing from becoming an excessively large value. This can reduce the probability of erroneous detection of the obstacle O at a short distance. Further, since the longer the detection distance, the lower the reference value is set, the difference value is prevented from becoming an excessively small value. This can reduce the probability of failure to detect the obstacle O at a long distance.

As described above, each object detection device 200 according to the present embodiment can properly set the reference value used in the CFAR processing, according to the detection distance. This allows object detection using the CFAR processing to be performed with high accuracy.

A program for causing a computer (the processor 223 or 130 in the above embodiment) to execute processing to implement the functions as described above may be stored in an installable-format or executable-format file on a computer-readable storage medium such as a CD-ROM, a CD-R, a memory card, a digital versatile disk (DVD), or a flexible disk (FD) to be provided as a computer program product. The program may be stored on a computer connected to a network such as the Internet and downloaded via the network to be provided. The program may be provided or distributed via a network such as the Internet.

### REFERENCE SIGNS LIST

1: Vehicle, 2: Vehicle body, 3F: Front wheel, 3R: Rear wheel, 100: ECU 110: Input-output device, 120: Storage device, 130: Processor, 200, 201 to 204: Object detection device, 210: Transceiver, 211: Vibrator, 220: Controller, 221: Input-output device, 222: Storage device, 223: Processor, 411: Transmitting unit, 412: Transmission control unit, 421: Receiving unit, 422: Preprocessing unit, 423: CFAR processing unit, 424: Setting unit, 425: Detection processing unit, 501: Processing target signal, 502: First reference signal group, 503: Second reference signal group, L11, L700: Envelope, L701: Overall average value line, L702: Maximum average value line, L703: Minimum average value line, and Th: Detection threshold

## Claims

1. An object detection device (200), comprising:
a transmitting unit (411) configured to transmit a transmission wave;
a receiving unit (421) configured to receive a reception wave produced by reflection of the transmission wave off an object;
a CFAR processing unit (423) configured to acquire a difference value between a processing target value that is a value of a processing target signal corresponding to the reception wave received at a certain detection timing, and a reference value based on a moving average value of values of reference signal groups corresponding to the reception wave received during predetermined periods before and after the detection timing;
a detection processing unit (425) configured to generate information about the object, based on the difference value; and
a setting unit (424) configured to select the reference value suitable for a detection distance corresponding to the detection timing from a plurality of the reference values set in advance,
**characterized in that**
the setting unit (424) is configured to set the reference value such that the shorter the detection distance, the larger the reference value, and
the setting unit (424) is configured to select a first reference value from the plurality of reference values when the detection distance is in a predetermined short distance range, select a second reference value smaller than the first reference value from the plurality of reference values when the detection distance is in a medium distance range farther than the short distance range, and select a third reference value smaller than the second reference value from the plurality of reference values when the detection distance is in a long distance range farther than the medium distance range, wherein
the first reference value is a maximum average value that is a larger value of a first average value that is an average value of values of a first reference signal group corresponding to the reception wave received during a first predetermined time before the detection timing, and a second average value that is an average value of values of a second reference signal group corresponding to the reception wave received during a second predetermined time after the detection timing,
the second reference value is an overall average value that is an average value of all reference values including the values of the first reference signal group and the values of the second reference signal group, and
the third reference value is a minimum average value that is a smaller value of the first average value and the second average value.

## Patentansprüche

1. Objekterkennungsvorrichtung (200), Folgendes umfassend:
eine Sendeeinheit (411), die konfiguriert ist, um eine Sendewelle auszusenden;
eine Empfangseinheit (421), die konfiguriert ist, um eine Empfangswelle zu empfangen, die durch Reflexion der Sendewelle an einem Objekt entsteht;
eine CFAR-Verarbeitungseinheit (423), die konfiguriert ist, um einen Differenzwert zwischen einem Verarbeitungszielwert, der ein Wert eines Verarbeitungszielsignals ist, das der zu einem bestimmten Erfassungszeitpunkt empfangenen Empfangswelle entspricht, und einem Referenzwert auf der Grundlage eines gleitenden Mittelwerts von Werten von Referenzsignalgruppen zu ermitteln, die der Empfangswelle entsprechen, die während vorbestimmter Zeiträume vor und nach dem Erfassungszeitpunkt empfangen wurden;
eine Erfassungsverarbeitungseinheit (425), die konfiguriert ist, um auf der Grundlage des Differenzwerts Informationen über das Objekt zu erzeugen; und
eine Einstelleinheit (424), die konfiguriert ist, um den für eine dem Erfassungszeitpunkt entsprechende Erfassungsentfernung geeigneten Referenzwert aus einer Vielzahl von vorab eingestellten Referenzwerten auszuwählen,
**dadurch gekennzeichnet, dass**
die Einstelleinheit (424) konfiguriert ist, um den Referenzwert so einzustellen, dass der Referenzwert umso größer ist, je kürzer die Erfassungsentfernung ist, und
die Einstelleinheit (424) konfiguriert ist, um einen ersten Referenzwert aus der Vielzahl von Referenzwerten auszuwählen, wenn sich die Erfassungsentfernung in einem vorbestimmten Nahentfernungsbereich befindet, um einen zweiten Referenzwert, der kleiner als der erste Referenzwert ist, aus der Vielzahl von Referenzwerten auszuwählen, wenn sich die Erfassungsentfernung in einem Mittel-Entfernungsbereich befindet, der weiter entfernt ist als der Nahentfernungsbereich, und um einen dritten Referenzwert, der kleiner ist als der zweite Referenzwert, aus der Vielzahl von Referenzwerten auszuwählen, wenn sich die Erfassungsentfernung in einem Fern-Entfernungsbereich befindet, der weiter entfernt ist als der mittlere Entfernungsbereich, wobei
der erste Referenzwert ein maximaler Mittelwert ist, der ein größerer Wert ist von einem ersten Mittelwert, der ein Mittelwert von Werten einer ersten Referenzsignalgruppe ist, die der während einer ersten vorbestimmten Zeit vor dem Erfassungszeitpunkt empfangenen Empfangswelle entspricht, und einem zweiten Mittelwert, der ein Mittelwert von Werten einer zweiten Referenzsignalgruppe ist, die der während einer zweiten vorbestimmten Zeit nach dem Erfassungszeitpunkt empfangenen Empfangswelle entspricht,
der zweite Referenzwert ein Gesamtmittelwert ist, der ein Mittelwert aller Referenzwerte einschließlich der Werte der ersten Referenzsignalgruppe und der Werte der zweiten Referenzsignalgruppe ist, und
der dritte Referenzwert ein minimaler Mittelwert ist, der einen kleineren Wert von dem ersten Mittelwert und dem zweiten Mittelwert darstellt.

## Revendications

1. Dispositif de détection d'objets (200), comprenant :
une unité de transmission (411) configurée pour transmettre une onde de transmission ;
une unité de réception (421) configurée pour recevoir une onde de réception produite par la réflexion de l'onde de transmission sur un objet ;
une unité de traitement CFAR (423) configurée pour acquérir une valeur de différence entre une valeur cible de traitement, qui est une valeur d'un signal cible de traitement correspondant à l'onde de réception reçue à un certain moment de détection, et une valeur de référence basée sur une valeur moyenne mobile de valeurs de groupes de signaux de référence correspondant à l'onde de réception reçue pendant des périodes prédéterminées avant et après le moment de détection ;
une unité de traitement de détection (425) configurée pour générer des informations concernant l'objet, sur la base de la valeur de différence ; et
une unité de réglage (424) configurée pour sélectionner la valeur de référence adaptée à une distance de détection correspondant à l'instant de détection parmi une pluralité de valeurs de référence définies à l'avance,
**caractérisé en ce que**
l'unité de réglage (424) est configurée pour définir la valeur de référence de telle sorte que plus la distance de détection est courte, plus la valeur de référence est grande, et
l'unité de réglage (424) est configurée pour sélectionner une première valeur de référence parmi la pluralité de valeurs de référence lorsque la distance de détection se situe dans une plage de courte distance prédéterminée, pour sélectionner une deuxième valeur de référence inférieure à la première valeur de référence parmi la pluralité de valeurs de référence lorsque la distance de détection se situe dans une plage de distance moyenne plus éloignée que la plage de courte distance, et pour sélectionner une troisième valeur de référence inférieure à la deuxième valeur de référence parmi la pluralité de valeurs de référence lorsque la distance de détection se situe dans une plage de longue distance plus éloignée que la plage de distance moyenne, dans laquelle
la première valeur de référence est une valeur moyenne maximale qui est une valeur plus grande parmi une première valeur moyenne, qui est une valeur moyenne de valeurs d'un premier groupe de signaux de référence correspondant à l'onde de réception reçue pendant un premier intervalle de temps prédéterminé avant l'instant de détection, et une deuxième valeur moyenne, qui est une valeur moyenne de valeurs d'un deuxième groupe de signaux de référence correspondant à l'onde de réception reçue pendant un deuxième intervalle de temps prédéterminé après l'instant de détection,
la deuxième valeur de référence est une valeur moyenne globale qui est une valeur moyenne de toutes les valeurs de référence, y compris les valeurs du premier groupe de signaux de référence et les valeurs du deuxième groupe de signaux de référence, et
la troisième valeur de référence est une valeur moyenne minimale qui est une valeur plus petite parmi la première valeur moyenne et la deuxième valeur moyenne.
